# EUROPEAN PATENT APPLICATION

(11) **EP 2 793 125 A1**
(43) Date of publication of application: **22.10.2014**
(21) Application number: 13163695.3
(22) Date of filing: 15.04.2013
(51) Int. Cl.: G06F 9/44

(54) **Human machine interface**

(71) Applicant: Volvo Car Corporation, 40531 Göteborg (SE)
(72) Inventor: Lind, Henrik, 42339 Torslanda (SE); Broström, Robert, 42353 Torslanda (SE)
(74) Representative: Kraenzmer, Martin

(57) **Abstract**

A method of customising the interface of an infotainment system comprises receiving a user profile from at least one of a multimedia device, a local store of the infotainment system, or cloud storage; and customises the interface of the infotainment system based on the received user profile. A system (100) for customising the interface of an infotainment system comprises a receiving module (102) configured for receiving a user profile from at least one of a multimedia device, a local store of the infotainment system, or a cloud storage, wherein the multimedia device is connectable to the infotainment system, and a customising module (110) configured for customising the interface of the infotainment system based on the received user profile.

## Description

### FIELD OF THE INVENTION

The present invention relates to infotainment systems. In particular, the present invention relates to customising the interfaces of infotainment systems based on connectable multimedia devices.

### TECHNICAL BACKGROUND

Over the years, car stereos have evolved into infotainment systems. These infotainment systems are capable of managing a variety of tasks as compared to simple car stereos. Present day infotainment systems store vehicular data, driver data and also include Global Positioning System (GPS)-based navigation controls. This has increased the complexity of the interfaces used for operating the infotainment systems. Further, each vehicle manufacturer chooses to include their own interface in the infotainment system of their vehicles. Each infotainment system thus requires learning time. This learning time varies depending on a user's previous experience from the use of similar systems. As compared to consumer electronic devices like mobile phones, the learning process while driving is inefficient and draws attention away from the primary task of driving. Thus, drivers who regularly drive cars belonging to different manufacturers are faced with an uphill task of adaptively using the interface of the respective proprietary infotainment systems. As a result, the infotainment systems end up distracting the drivers from the primary task of driving the vehicles. Thus, there is a need for a better infotainment system which does not distract the driver from the primary task of driving the vehicle. At the same time, this infotainment system should be fairly simple and intuitive to use.

### SUMMARY OF THE INVENTION

The objective of the invention is to customise the interface of an infotainment system.

This object is achieved by the system and method as set forth in the appended claims.

According to the present invention the method of customising the interface of the infotainment system comprises receiving a user profile from at least one of a multimedia device, a local store of the infotainment system, or a cloud; and customising the interface of the infotainment system based on the received user profile. Thus, the user of the infotainment system is greeted with an interface which closely emulates the interface of the user's multimedia device and is familiar and easy to operate. A local store is a local storage or a local database or a built in memory of the infotainment system. The local store can further be updated

According to one aspect of the invention, the multimedia device is connectable to the infotainment system using at least one of a wired connection or a wireless connection. This allows the user to conveniently connect the multimedia device to the infotainment system using any of the available wired or wireless means.

According to another aspect of the invention, the multimedia device is at least one of a mobile phone, a portable music player or a pen drive. Thus, the user can use his mobile phone or a pen drive or a similar handheld device to load his user profile into the infotainment system.

In a further aspect of the present invention, the cloud storage is connectable to the infotainment system via the Internet. This provides the user the flexibility of directly providing his user profile to the infotainment system without requiring any multimedia or handheld device.

According to yet another aspect of the present invention, the infotainment system is incorporated in a vehicle. This allows the user to access a customised interface of the infotainment system based on his user profile. This interface is familiar, easy to operate, and also includes the user's personal preferences.

### BRIEF DESCRIPTION OF THE DRAWINGS

The invention will now be further disclosed and the advantages of the present invention will become readily apparent to those skilled in the art through the following detailed description of the accompanying drawings.
Figure 1 is a block diagram of a system for customising the interface of an infotainment system, in accordance with an embodiment of the invention;
Figure 2 is a flowchart illustrating the steps of customising the interface of an infotainment system, in accordance with an embodiment of the invention; and
Figure 3 is a flowchart illustrating the steps of customising the interface of an infotainment system, in accordance with another embodiment of the invention.

### DISCLOSURE OF PREFERRED EMBODIMENTS

The figures are schematic and simplified for clarity and merely show details essential for understanding the invention. Throughout the disclosure the same reference numerals have been used to represent identical or corresponding parts.

Modern-day infotainment systems are designed to provide a lot of services other than simply playing back audio music. These infotainment systems have found widespread adoption in vehicles and, in some cases, also assist the drivers of the vehicles in vehicle navigation tasks by connecting with the Global Positioning System (GPS) satellites to accurately track vehicle location, provide turn signal warnings, etc. A typical infotainment system includes GPS navigation data, vehicle maintenance data, vehicle-specific settings, active safety functions, connectivity service data and performance tuning settings. For example, some vehicles allow a user to use the infotainment system to switch the vehicle from a two-wheel drive to a four-wheel drive. Some other vehicles also allow a user to use the infotainment system to switch from an "economy mode" to "sports mode" for a more spirited drive.

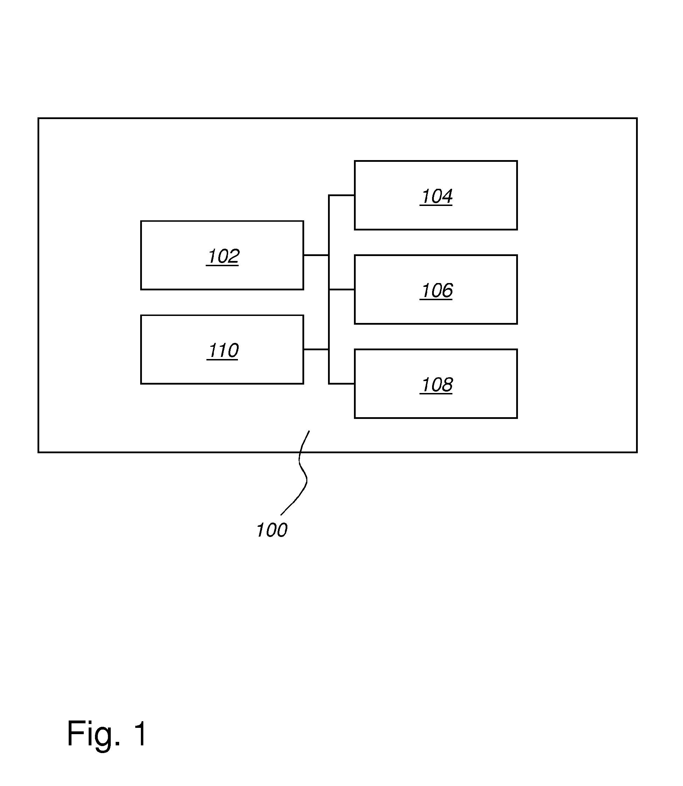

Figure 1 is a block diagram of a system 100 for customising the interface of an infotainment system, in accordance with an embodiment of the invention. The system 100 comprises a receiving module 102, a graphics module 104, a control module 106, an interaction module 108 and a customising module 110.

The receiving module 102 is configured for receiving a user profile from at least one of a multimedia device, a local store of the infotainment system, or a cloud storage. The user profile is a set of preferences for a user or vehicle driver. The multimedia device may be a mobile phone, a portable music player, a pen drive or a similar handheld device.

In accordance with an embodiment of the invention, when a user connects his mobile phone to the infotainment system, the receiving module 102 of the system 100 receives the user profile from the mobile phone. The user profile contains a set of preferences including information pertaining to the look and feel, behaviour and location of controls as familiar to the user. For example, an iPhone^{®} user may be accustomed to a particular arrangement of icons and this information may constitute the set of preferences for the iPhone^{®} user. Similarly, a Windows Phone^{®} user may be accustomed to a particular arrangement of 'live tiles' and this information may constitute the set of preferences for the Windows Phone^{®} user. Further, the user profile may also include additional preferences such as selection of applications, contact list, voice settings, internet bookmarks, wireless service as well as details of cloud service.

In accordance with an embodiment of the invention, the multimedia device may be connectable to the infotainment system using a wired connection such as a data cable or auxiliary cable. In accordance with another embodiment of the invention, the multimedia device may also be connectable to the infotainment system using a wireless connection such as a Bluetooth connection or a Wi-Fi connection or Near Field Communications (NFC) or other known wireless technologies.

In accordance with another embodiment of the invention, the receiving module 102 receives the user profile from a local store of the infotainment system. In such an embodiment, the set of preferences contained in the user profile is directly received from the local store of the infotainment system. The local store is a local storage or a local database or in-built memory of the infotainment system.

In accordance with yet another embodiment of the invention, the receiving module 102 receives the user profile from a cloud storage. Cloud storage is a model of networked online storage in which data and information is stored in virtualised pools of storage which are generally hosted by third-party storage providers. For example, the user profile may be stored in cloud storage hosted by company A. The infotainment system may be provided with an Internet connection to allow it to connect to the cloud storage and download the user profile from the cloud storage. Typically, wireless internet connection is used to connect the infotainment system to the cloud storage. In such an embodiment, the infotainment system is provided with a wireless Internet connection to allow it to connect to the cloud storage.

The graphics module 104 is configured for selecting a graphics model based on the received user profile. The graphics model is the arrangement and layout of various options available in the infotainment system. Different graphics models may be used to represent the same options in a different manner. For example, an iPhone^{®} user is accustomed to a particular arrangement of icons. Similarly, a Windows Phone^{®} user is accustomed to a particular arrangement of 'live tiles'.

The control module 106 is configured for selecting a touch interface based on the received user profile. The touch interface is defined as the behaviour/response of the interface of the infotainment system when a user selects a particular option out of the various options available in the infotainment system. For example, an iPhone^{®} user gets a "bounce effect" upon selecting an option in their mobile phone. Similarly, an Android phone user gets a fade effect upon selecting an option in their mobile phone.

The interaction module 108 is configured for selecting user behaviour information based on the received user profile. The user behaviour information is defined as information about the driver, his preferable driving style, etc. For example, the infotainment system may be used to adjust the performance tuning settings based on the preferable driving style of the user. Thus, the infotainment system may be used to switch the vehicle from "economy mode" to "sports mode" for a more spirited drive.

Thereafter, the customising module 110 is configured for customising the interface of the infotainment system based on the received user profile. In other words, the customising module 110 is configured for customising the interface of the infotainment system based on the graphics model, the touch interface, and the user behaviour information. For example, when a user connects his iPhone^{®} to the infotainment system, the receiving module 102 receives the user profile from the iPhone. Thereafter, the graphics module 104, the control module 106 and the interaction module 108 select the graphics model, the touch interface and the user behaviour information respectively from the received user profile. Finally, the customising module 110 customises the interface of the infotainment system based on the graphics model, the touch interface and the user behaviour information. Thus, the interface of the infotainment system gets customised to emulate the interface of the iPhone^{®} of the user. Similarly, an Android phone user may connect his Android phone to the infotainment system to customise the interface of the infotainment system according to the graphics model and the touch interface of the Android phone.

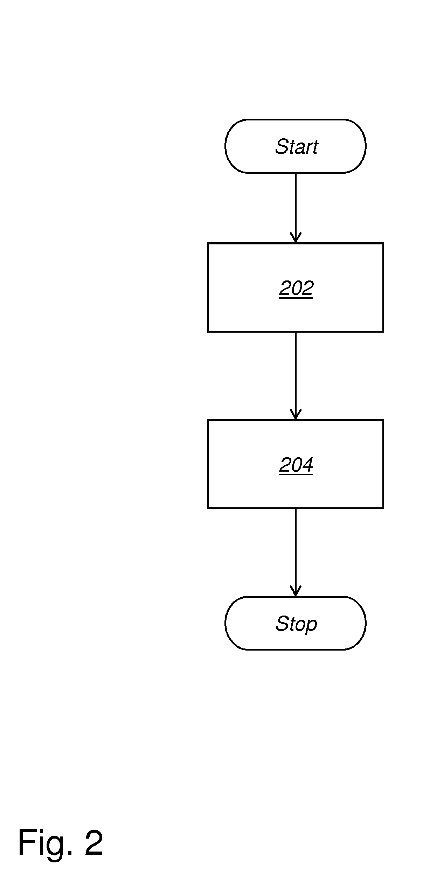

Figure 2 is a flowchart illustrating the steps of customising the interface of an infotainment system, in accordance with an embodiment of the invention. At step 202, the user profile is received from at least one of a multimedia device, a local store of the infotainment system, or a cloud storage. As described earlier, the multimedia device may be a mobile phone, a portable music player, a pen drive or a similar handheld device (game, pad, etc.). The user profile contains a set of preferences including information pertaining to the look and feel, behaviour and location of controls as familiar to the user.

Thereafter, at step 204, the interface of the infotainment system is customised based on the received user profile. The interface of the infotainment system is customised based on the graphics model, the touch interface and the user behaviour information selected from the received user profile.

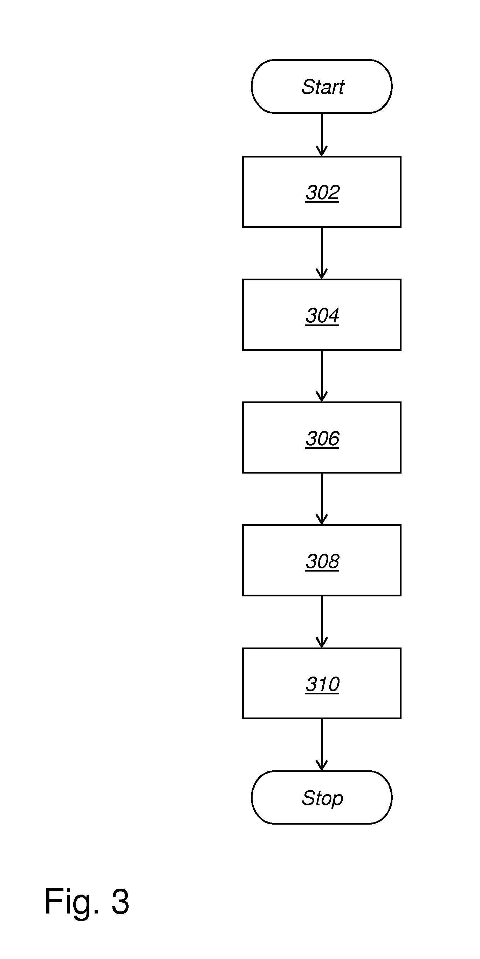

Figure 3 is a flowchart illustrating the steps of customising the interface of an infotainment system, in accordance with another embodiment of the invention. At step 302, a user profile is received from at least one of a multimedia device, a local store of the infotainment system, or a cloud storage. At step 304, a graphical model is selected based on the received user profile. At step 306, a touch interface is selected based on the received user profile. At step 308, a user behaviour information is selected based on the received user profile.

Thereafter, at step 310, the interface of the infotainment system is customised based on the selected graphical user interface, the selected touch interface and the selected user behaviour information. For example, when a user connects his iPhone^{®} to the infotainment system, the receiving module 102 receives the user profile from the iPhone. Thereafter, the graphics module 104, the control module 106 and the interaction module 108 select the graphics model, the touch interface and the user behaviour information respectively from the received user profile. Finally, the customising module 110 customises the interface of the infotainment system based on the graphics model, the touch interface and the user behaviour information. Thus, the interface of the infotainment system gets customised to emulate the interface of the iPhone^{®} to the user. Alternatives to touch interfaces could of course be used such as for instance an interface that uses spatial gestures for interaction.

The foregoing is a disclosure of an example practicing the present invention. However, it is apparent that the system for customising the interface of the infotainment system incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the interface of the infotainment system could be customised to display the same interface on all the vehicles driven by the same user.

## Claims

1. A system (100) for customising the interface of an infotainment system, the system (100) comprising:
a. a receiving module (102) configured for receiving a user profile from at least one of a multimedia device, a local store of the infotainment system, or a cloud storage; wherein the multimedia device is connectable to the infotainment system; and
b. a customising module (110) configured for customising the interface of the infotainment system based on the received user profile.

2. A system (100) for customising the interface of an infotainment system according to claim 1; wherein the multimedia device is connectable to the infotainment system using at least one of a wired connection or a wireless connection.

3. A system (100) for customising the interface of an infotainment system according to claim 1; wherein the multimedia device is at least one of a mobile phone, a portable music player or a pen drive.

4. A system (100) for customising the interface of an infotainment system according to claim 1 further comprising a graphics module (104) configured for selecting a graphical user interface based on the received user profile.

5. A system (100) for customising the interface of an infotainment system according to claim 1 further comprising a control module (106) configured for selecting a touch interface based on the received user profile.

6. A system (100) for customising the interface of an infotainment system according to claim 1 further comprising an interaction module (108) configured for selecting user behaviour information based on the received user profile.

7. A system (100) for customising the interface of an infotainment system according to claim 1; wherein the infotainment system comprises at least one of a GPS navigation data, vehicle maintenance data, vehicle settings, active safety functions or connectivity service data.

8. A system (100) for customising the interface of an infotainment system according to claim 1; wherein the cloud storage is connectable to the infotainment system via internet.

9. A system (100) for customising the interface of an infotainment system according to claim 1; wherein the infotainment system is incorporated in a vehicle.

10. A method of customising the interface of an infotainment system, the method comprising:
a. receiving a user profile from at least one of a multimedia device, a local store of the infotainment system, or a cloud storage; wherein the multimedia device is connectable to the infotainment system; and
b. customising the interface of the infotainment system based on the received user profile.

11. A method of customising the interface of an infotainment system according to claim 10; wherein the multimedia device is connectable to the infotainment system using at least one of a wired connection or a wireless connection.

12. A method of customising the interface of an infotainment system according to claim 10 further comprising selecting a graphics model based on the received user profile.

13. A method of customising the interface of an infotainment system according to claim 10 further comprising selecting a touch interface based on the received user profile.

14. A method of customising the interface of an infotainment system according to claim 10 further comprising selecting user behaviour information based on the received user profile.

15. A method of customising the interface of an infotainment system, the method comprising:
a. receiving a user profile from at least one of a multimedia device, a local store of the infotainment system, or a cloud storage; wherein the multimedia device is connectable to the infotainment system;
b. selecting a graphical user interface based on the received user profile;
c. selecting a touch interface based on the received user profile;
d. selecting a user behaviour information based on the received user profile; and
e. customising the interface of the infotainment system based on the selected graphical user interface, the selected touch interface and the selected user behaviour information.
